# EUROPÄISCHE PATENTSCHRIFT

(11) **EP 1 508 581 B1**
(45) Veröffentlichungstag und Bekanntmachung des Hinweises auf die Patenterteilung: **04.04.2007**
(21) Anmeldenummer: 04103128.7
(22) Anmeldetag: 02.07.2004
(51) Int. Cl.: C08G 6/02, C08L 61/02, C08L 61/24, C09D 4/06

(54) **Strahlenhärtbare Harze auf Basis von Keton- und/oder Harnstoff-Aldehydharzen und ein Verfahren zu ihrer Herstellung**
Radiation curable resins based on ketone and/or urea-aldehyde resins and process for their preparation
Résines durcissables par rayons à base de résines cétone et/ou urée-aldéhyde et procédé pour leur préparation

(30) Priorität: 22.08.2003 DE 10338562
(43) Veröffentlichungstag der Anmeldung: 23.02.2005
(73) Patentinhaber: Degussa GmbH, 40474 Düsseldorf (DE)
(72) Erfinder: Glöckner, Patrick, Dr., 40885, Ratingen (DE); Mindach, Lutz, Dr., 45770, Marl (DE)

(56) Entgegenhaltungen:
- EP-A- 0 902 065
- DE-A- 4 344 125
- DE-B- 2 438 724

## Beschreibung

Die Erfindung betrifft strahlenhärtbare Harze auf Basis von Keton- und Harnstoff-Aldehydharzen sowie ein Verfahren zu ihrer Herstellung.

Strahlenhärtbare Beschichtungsstoffe haben innerhalb der letzten Jahre zunehmend an Bedeutung gewonnen, da u.a. der Gehalt an flüchtigen organischen Verbindungen (VOC) dieser Systeme gering ist.

Die filmbildenden Komponenten sind im Beschichtungsstoff relativ niedermolekular und deshalb niedrigviskos, so dass auf hohe Anteile organischer Lösemittel verzichtet werden kann. Dauerhafte Beschichtungen werden erhalten, indem nach Applikation des Beschichtungsstoffes ein hochmolekulares, polymeres Netzwerk durch z. B. UV-Licht initiierte Vernetzungsreaktionen gebildet wird.

Keton-Aldehydharze werden in Beschichtungsstoffen z. B. als Additivharze eingesetzt, um bestimmte Eigenschaften wie Antrocknungsgeschwindigkeit, Glanz, Härte oder Kratzfestigkeit zu verbessern. Wegen ihres relativ geringen Molekulargewichtes besitzen übliche Keton-Aldehydharze eine geringe Schmelz- und Lösungsviskosität und dienen daher in Beschichtungsstoffen u.a. als filmbildende Funktionsfüllstoffe.

Üblicherweise verfügen Keton-Aldehydharze über Hydroxygruppen und können daher nur mit z. B. Polyisocyanaten oder Aminharzen vernetzt werden. Diese Vernetzungsreaktionen werden üblicherweise thermisch eingeleitet bzw. beschleunigt.

Für strahlungsinitiierte Vernetzungsreaktionen nach kationischen und/oder radikalischen Reaktionsmechanismen sind die Keton-Aldehydharze nicht geeignet.

Daher werden die Keton-Aldehydharze üblicherweise in strahlenhärtbaren Beschichtungsstoff-Systemen z. B. als filmbildende, jedoch nicht vernetzende Zusatzkomponente eingesetzt.

Derartige Beschichtungen besitzen oft wegen der unvernetzten Harz-Anteile eine geringere Widerstandsfähigkeit gegenüber z. B. Benzin, Chemikalien oder Lösemitteln.

WO 95/17476, DE 23 45 624, EP 736 074, DE 28 47 796, DD 24 0318, DE 24 38 724, JP 09143396 beschreiben die Verwendung von Keton-Aldehyd- und Ketonharzen, z. B. Cyclohexanon-Formaldehydharzen in strahlenhärtbaren Systemen. Strahleninduzierte Vernetzungsreaktionen dieser Harze sind nicht beschrieben.

EP 0 902 065 beschreibt die Verwendung von nicht strahlungshärtbaren Harzen aus Harnstoff(derivaten), Keton oder Aldehyden als Zusatzkomponente im Gemisch mit strahlungshärtbaren Harzen.

DE 24 38 712 beschreibt strahlungshärtende Druckfarben aus filmbildenden Harzen, Keton- und Keton-Formaldehydharzen sowie polymerisierbaren Komponenten wie polyfunktionellen Acrylatestern mehrwertiger Alkohole. Dem Fachmann ist offensichtlich, dass eine strahleninduzierte Vernetzungsreaktion der modifizierten Keton-Aldehyd- und Ketonharze nur durch die Verwendung von ungesättigten Fettsäuren eintreten kann. Es ist jedoch bekannt, dass Harze mit einem hohen Ölgehalt zu unerwünschten Vergilbungen neigen.

US 4,070,500 beschreibt die Verwendung nicht-strahlungshärtbarer Keton-FormaldehydHarze als filmbildende Komponente in strahlungshärtbaren Tinten.

Aufgabe der vorliegenden Erfindung war es, Keton-Aldehydharze und/oder Harnstoff-Aldehydharze derart chemisch zu modifizieren, dass strahlenhärtbare Harze resultieren, die verseifungsstabil und widerstandsfähig sind sowie eine hohe Vergilbungsbeständigkeit besitzen.

Überraschender Weise konnte diese Aufgabe gelöst werden, in dem Keton-Aldehydharze und/oder Harnstoff-Aldehydharze polymeranalog mit ethylenisch ungesättigten Gruppierungen versehen wurden.

Es hat sich gezeigt, dass diese Keton-Aldehydharze und/oder Harnstoff-Aldehydharze, die über ethylenisch ungesättigte Gruppierungen verfügen, in Gegenwart geeigneter Verbindungen wie z. B. Photoinitiatoren gegebenenfalls in Gegenwart geeigneter Photosensibilisatoren durch z. B. UV-Licht induziert in ein polymeres Netzwerk umgewandelt werden können, das, je nach Anteil ethylenisch ungesättigter Gruppen, eine hohe bis sehr hohe Härte und Widerstandsfähigkeit besitzt.

Gegenstand der Erfindung sind strahlenhärtbare Harze, erhalten durch polymeranaloge Umsetzung von
A) mindestens einem Keton-Aldehydharz,
   und/oder
B) mindestens einem Harnstoff-Aldehydharz
   mit
C) mindestens einer Verbindung, welche mindestens eine ethylenisch ungesättigte Gruppierung und gleichzeitig mindestens eine gegenüber A) und/oder B) reaktive Gruppierung aufweist.

Es ist auch möglich, einen Teil der Keton-Aldehydharze A) und/oder Harnstoff-Aldehydharze B) durch weitere geeignete Polymere wie z. B. hydroxyfunktionelle Polyether, Polyester und/oder Polyacrylate zu ersetzen. Dabei können direkt Mischungen dieser Polymere mit den Keton-Aldehydharzen und/oder Harnstoff-Aldehydharzen polymeranalog mit Komponente C) umgesetzt werden. Es hat sich gezeigt, dass zunächst auch Addukte der Keton-Aldehydharze und/oder Harnstoff-Aldehydharzen mit z. B. hydroxyfunktionellen Polyethern, Polyestern und/oder Polyacrylaten unter Verwendung der im Folgenden genannten Di- und/oder Triisocyanaten hergestellt werden können, die dann erst mit Komponente C) polymeranalog umgesetzt werden. Im Gegensatz zu den "reinen" Keton-Aldehydharzen und/oder Harnstoff-Aldehydharzen können hierdurch Eigenschaften wie z. B. Flexibilität, Härte noch besser eingestellt werden.

Als Ketone zur Herstellung der Keton-Aldehydharze (Komponente A) eignen sich alle Ketone, insbesondere Aceton, Acetophenon, Methylethylketon, Heptanon-2, Pentanon-3, Methylisobutylketon, Cyclopentanon, Cyclododecanon, Mischungen aus 2,2,4- und 2,4,4-Trimethylcyclopentanon, Cycloheptanon und Cyclooctanon, Cyclohexanon und alle alkylsubstituierten Cyclohexanone mit einem oder mehreren Alkylresten, die insgesamt 1 bis 8 Kohlenstoffatome aufweisen, einzeln oder in Mischung. Als Beispiele alkylsubstituierter Cyclohexanone können 4-tert.-Amylcyclohexanon, 2-sek.-Butylcyclohexanon, 2-tert.-Butylcyclohexanon, 4-tert.-Butylcyclohexanon, 2-Methylcyclohexanon und 3,3,5-Trimethylcyclohexanon genannt werden.

Im allgemeinen können aber alle in der Literatur für Ketonharzsynthesen als geeignet genannten Ketone, in der Regel alle C-H-aciden Ketone, eingesetzt werden. Bevorzugt werden Keton-Aldehydharze auf Basis der Ketone Acetophenon, Cyclohexanon, 4-tert.-Butylcyclohexanon, 3,3,5-Trimethylcyclohexanon und Heptanon allein oder in Mischung.

Als Aldehyd-Komponente der Keton-Aldehydharze (Komponente A) eignen sich prinzipiell unverzeigte oder verzweigte Aldehyde, wie z. B. Formaldehyd, Acetaldehyd, n-Butyraldehyd und/oder iso-Butyraldehyd, Valerianaldehyd sowie Dodecanal. Im allgemeinen können alle in der Literatur für Ketonharzsynthesen als geeignet genannten Aldehyde eingesetzt werden. Bevorzugt wird jedoch Formaldehyd allein oder in Mischungen verwendet.

Das benötigte Formaldehyd wird üblicherweise als ca. 20 bis 40 Gew.-%ige wässrige oder alkoholische (z. B. Methanol oder Butanol) Lösung eingesetzt. Andere Einsatzformen des Formaldehyds wie z. B. auch die Verwendung von para-Formaldehyd oder Trioxan sind ebenfalls möglich. Aromatische Aldehyde, wie z. B. Benzaldehyd, können in Mischung mit Formaldehyd ebenfalls enthalten sein.

Besonders bevorzugt werden als Ausgangsverbindungen für die Komponente A) Acetophenon, Cyclohexanon, 4-tert.-Butylcyclohexanon, 3,3,5-Trimethylcyclohexanon sowie Heptanon allein oder in Mischung und Formaldehyd eingesetzt.

Die Herstellung und die Monomere für Komponente B) sind in EP 0 271 776 beschrieben:

Als Komponente B) werden Harnstoff-Aldehydharze unter Verwendung eines Harnstoffes der allgemeinen Formel (i) 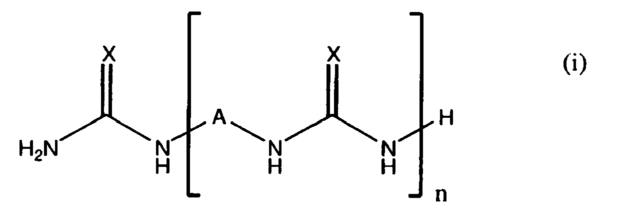 in der X Sauerstoff oder Schwefel, A einen Alkylenrest bedeuten und n für 0 bis 3 steht, mit 1,9 (n + 1) bis 2,2 (n + 1) mol eines Aldehyds der allgemeinen Formel (ii) 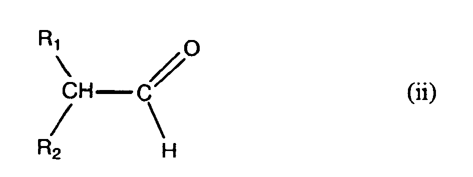 in der R₁ und R₂ für Kohlenwasserstoffreste (z.B. Alkyl-, Aryl- und / oder Alkylarylreste) mit jeweils bis zu 20 Kohlenstoffatomen stehen und/oder Formaldehyd verwendet.

Geeignete Harnstoffe der allgemeinen Formel (i) mit n = 0 sind z. B. Harnstoff und Thioharnstoff, mit n = 1 Methylendiharnstoff, Ethylendiharnstoff, Tetramethylendiharnstoff und/oder Hexamethylendiharnstoff sowie deren Gemische. Bevorzugt ist Harnstoff.

Geeignete Aldehyde der allgemeinen Formel (ii) sind beispielsweise Isobutyraldehyd, 2-Methylpentanal, 2-Ethylhexanal und 2-Phenylpropanal sowie deren Gemische. Bevorzugt ist Isobutyraldehyd.

Formaldehyd kann in wässriger Form, die zum Teil oder ganz auch Alkohole wie z. B. Methanol oder Ethanol enthalten kann, als Paraformaldehyd und/oder Trioxan verwendet werden.

Im Allgemeinen sind alle Monomere, die in der Literatur zur Herstellung von Aldehyd-Harnstoffharzen beschrieben sind, geeignet.

Typische Zusammensetzungen sind z. B. in DE 27 57 220, DE-OS 27 57 176 sowie EP 0271 776 beschrieben.

Die der Erfindung zugrundeliegenden strahlenhärtbaren Harze werden durch polymeranaloge Umsetzung der Keton-Aldehydharze und/oder der Harnstoff-Aldehydharze in der Schmelze oder in Lösung eines geeigneten Lösemittels mit der Komponente C) erhalten. Geeignet sind Maleinsäureanhydrid, (Meth)acrylsäurederivaten wie z. B. (Meth)acryloylchlorid, Glycidyl(meth)acrylat, (Meth)acrylsäure und/oder deren niedermolekularen Alkylestem und/oder Anhydriden allein oder in Mischung. Darüber hinaus lassen sich strahlenhärtbare Harze erhalten durch Umsetzung der Keton-Aldehydharze und Harnstoff-Aldehydharze mit Isocyanaten, die über eine ethylenisch ungesättigte Gruppierung verfügen, wie z. B. (Meth)acryloylisocyanat, α,α-Dimethyl-3-isopropenylbenzylisocyanat, (Meth) acrylalkylisocyanat mit Alkylspacern, die über ein bis 12, bevorzugt 2 bis 8, besonders bevorzugt 2 bis 6 Kohlenstoffatome verfügen, wie z. B. Methacrylethylisocyanat, Methacrylbutylisocyanat. Außerdem haben sich Umsetzungsprodukte aus Hydroxyalkyl(meth)acrylaten, deren Alkylspacer über ein bis 12, bevorzugt 2 bis 8, besonders bevorzugt 2 bis 6 Kohlenstoffatome verfügen, und Diisocyanaten wie z. B. Cyclohexandiisocyanat, Methylcyclohexandiisocyanat, Ethylcyclohexandiisocyanat, Propylcyclohexandiisocyanat, Methyldiethylcyclohexandiisocyanat, Phenylendiisocyanat, Toluylendiisocyanat, Bis(isocyanatophenyl)methan, Propandiisocyanat, Butandiisocyanat, Pentandiisocyanat, Hexandiisocyanat, wie Hexamethylendiisocyanat (HDI) oder 1,5-Diisocyanato-2-methylpentan (MPDI), Heptandiisocyanat, Octandiisocyanat, Nonandiisocyanat, wie 1,6-Diisocyanato-2,4,4-trimethylhexan oder 1,6-Diisocyanato-2,2,4-trimethylhexan (TMDI), Nonantriisocyanat, wie 4-Isocyanatomethy-1,8-octandiisocyanat (TIN), Dekandi- und triisocyanat, Undekandi- und - triisocyanat, Dodecandi- und -triisocyanate, Isophorondiisocyanat (IPDI), Bis(isocyanatomethyl-cyclohexyl)methan (H₁₂MDI), Isocyanatomethylmethylcyclohexylisocyanat, 2,5(2,6)-Bis(isocyanato-methyl)bicyclo[2.2.1]heptan (NBDI), 1,3-Bis(isocyanatomethyl)-cyclohexan (1,3-H₆-XDI) oder 1,4-Bis(isocyanatomethyl)cyclohexan (1,4-H₆-XDI) allein oder in Mischung als vorteilhaft erwiesen. Als Beispiele seien die Umsetzungsprodukte im molaren Verhältnis von 1:1 von Hydroxyethylacrylat und/oder Hydroxyethylmethacrylat mit Isophorondiisocyanat und/oder H₁₂MDI und/oder HDI genannt.

Eine andere bevorzugte Klasse von Polyisocyanaten sind die durch Trimerisierung, Allophanatisierung, Biuretisierung und/oder Urethanisierung der einfachen Diisocyanate hergestellten Verbindungen mit mehr als zwei Isocyanatgruppen pro Molekül, beispielsweise die Umsetzungsprodukte dieser einfachen Diisocyanate, wie beispielsweise IPDI, HDI und/oder HMDI mit mehrwertigen Alkoholen (z. B. Glycerin, Trimethylolpropan, Pentaerythrit) bzw. mehrwertigen Polyaminen oder die Triisocyanurate, die durch Trimerisierung der einfachen Diisocyanate, wie beispielsweise IPDI, HDI und HMDI, erhältlich sind.

Gegebenenfalls kann ein geeigneter Katalysator zur Herstellung der erfindungsgemäßen Harze eingesetzt werden. Geeignet sind alle in der Literatur bekannten Verbindungen, die eine OH-NCO-Reaktion beschleunigen, wie z. B. Diazabicyclooctan (DABCO) oder Dibutylzinndilaurat (DBTL).

Je nach Verhältnis der Edukte zueinander werden Harze erhalten, die gering bis hoch funktionell sind. Durch die Wahl der Edukte ist auch die Einstellung der späteren Härte des vernetzten Films möglich. Wird z. B. ein Hartharz wie das Cyclohexanon-Formaldehydharz mitα,α-Dimethyl-3-isopropenylbenzylisocyanat umgesetzt, werden Produkte höherer Härte erhalten als durch die Verwendung von (Meth)acrylethylisocyanat und/oder Hydroxyethylacrylat-Isophorondiisocyanat-Addukten; die Flexibilität ist allerdings dann geringer. Auch hat sich gezeigt, dass die Reaktivität von sterisch wenig gehinderten ethylenisch ungesättigten Verbindungen - wie z. B. von Hydroxyethylacrylat - höher ist als bei solchen, die sterisch gehindert sind wie z. B. α,α-Dimethyl-3-isopropenylbenzylisocyanat.

Grundsätzlich ist der Einbau ethylenisch ungesättigter Gruppierungen auch schon bei der Herstellung der Keton-Aldehyd-/Harnstoff-Aldehyd-Harze denkbar. Über die anteilige Verwendung geeigneter Monomerer, wie z. B. polymerisierbare Ketone mit olefinischen Doppelbindungen, lassen sich beliebige Funktionalisierungsgrade einstellen. Der Nachteil dieser Vorgehensweise liegt in der eingeschränkten Verfügbarkeit geeigneter Monomerbausteine.

Es ist auch möglich, einen Teil der Keton-Aldehydharze und/oder Harnstoff-Aldehydharze durch weitere hydroxyfunktionaliserte Polymere wie z. B. hydroxyfunktionelle Polyether, Polyester und/oder Polyacrylate zu ersetzen. Dabei können Mischungen dieser Polymere mit den Keton-Aldehydharzen und/oder Harnstoff-Aldehydharzen polymeranalog mit Komponente C) umgesetzt werden. Es hat sich gezeigt, dass zunächst auch Addukte der Keton-Aldehydharze und/oder Harnstoff-Aldehydharzen mit z. B. hydroxyfunktionellen Polyethern, Polyestern und/oder Polyacrylaten unter Verwendung von den oben genannten Di- und/oder Triisocyanaten hergestellt werden können, die erst dann mit Komponente C) polymeranalog umgesetzt werden. Im Gegensatz zu den "reinen" Keton-Aldehydharzen und/oder Harnstoff-Aldehydharzen können hierdurch Eigenschaften wie z. B. Flexibilität, Härte noch besser eingestellt werden. Die weiteren hydroxyfunktionellen Polymere besitzen in der Regel Molekulargewichte Mn zwischen 200 und 10 000 g/mol, bevorzugt zwischen 300 und 5 000 g/mol.

Gegenstand der Erfindung ist auch ein Verfahren zur Herstellung von strahlenhärtbaren Harzen durch polymeranaloge Umsetzung von
A) Keton-Aldehydharzen,
   und/oder
B) Harnstoff-Aldehydharzen,
   mit
C) Verbindungen, welche mindestens eine ethylenisch ungesättigte Gruppierung und gleichzeitig mindestens eine gegenüber A) und/oder B) reaktive Gruppierung aufweisen
gegebenenfalls unter Verwendung weiterer hydroxyfunktioneller Polymere.

Die Herstellung der erfindungszugrundeliegenden Harze erfolgt in der Schmelze oder in Lösung eines geeigneten, organischen Lösemittels der Keton-Aldehydharze und/oder Harnstoff-Aldehydharze. Das organische Lösemittel kann dabei gegebenenfalls ebenfalls über ungesättigte Gruppierungen verfügen und wirkt dann direkt als Reaktivverdünner in der späteren Anwendung.

Hierzu wird in einer bevorzugten Ausführungsform I
zu der Lösung oder Schmelze der Keton-Aldehydharze A) und/oder Harnstoff-Aldehydharze B) die Verbindung C), gegebenenfalls in Anwesenheit eines geeigneten, Katalysators, zugegeben.

Je nach Reaktivität der Komponente C) wird die Temperatur der Umsetzung gewählt. Bei Verwendung von Isocyanaten als Komponente C) haben sich Temperaturen zwischen 30 und 150°C, bevorzugt zwischen 50 und 140°C bewährt.

Das gegebenenfalls enthaltene Lösemittel kann falls gewünscht nach beendeter Reaktion abgetrennt werden, wobei dann in der Regel ein Pulver des erfindungsgemäßen Produktes erhalten wird.

Es hat sich als vorteilhaft erwiesen, 1 mol der Keton-Aldehydharze und/oder Harnstoff-Aldehydharze - bezogen auf Mₙ - mit 0,5 bis 15 mol, bevorzugt 1 bis 10 mol, besonders 2 bis 8 mol der ungesättigten Verbindung (Komponente C) zur Reaktion zu bringen.

In einer bevorzugten Ausführungsform II
wird zu der Lösung oder Schmelze der Keton-Aldehydharze A) und/oder Harnstoff-Aldehydharze B) und dem hydroxyfunktionellen Polymer, wie z. B. Polyether, Polyester und/oder Polyacrylat die Verbindung C), gegebenenfalls in Anwesenheit eines geeigneten Katalysators, zugegeben.

Je nach Reaktivität der Komponente C) wird die Temperatur der Umsetzung gewählt. Bei Verwendung von Isocyanaten als Komponente C) haben sich Temperaturen zwischen 30 und 150 °C, bevorzugt zwischen 50 und 140 °C bewährt.

Das gegebenenfalls enthaltene Lösemittel kann falls gewünscht nach beendeter Reaktion abgetrennt werden, wobei dann in der Regel ein Pulver des erfindungsgemäßen Produktes erhalten wird.

Es hat sich als vorteilhaft erwiesen, 1 mol der Keton-Aldehydharze und/oder Harnstoff-Aldehydharze und/oder zusätzlicher Polymere - bezogen auf Mₙ - mit 0,5 bis 15 mol, bevorzugt 1 bis 10 mol, besonders 2 bis 8 mol der ungesättigten Verbindung (Komponente C) zur Reaktion zu bringen.

In einer bevorzugten Ausführungsform III
wird zu der Lösung oder Schmelze der Keton-Aldehydharze A) und/oder Harnstoff-Aldehydharze B) und dem hydroxyfunktionellen Polymer, wie z. B. Polyether, Polyester und/oder Polyacrylat ein di- und/oder trifunktionelles Isocyanat gegeben und ein hydroxyfunktionelles Präaddukt hergestellt. Erst dann wird die Verbindung C), gegebenenfalls in Anwesenheit eines geeigneten Katalysators, zugegeben.

Je nach Reaktivität der Komponente C) wird die Temperatur der Umsetzung gewählt. Bei Verwendung von Isocyanaten als Komponente C) haben sich Temperaturen zwischen 30 und 150 °C, bevorzugt zwischen 50 und 140 °C bewährt.

Das gegebenenfalls enthaltene Lösemittel kann falls gewünscht nach beendeter Reaktion abgetrennt werden, wobei dann in der Regel ein Pulver des erfindungsgemäßen Produktes erhalten wird.
Es hat sich als vorteilhaft erwiesen, 1 mol der Keton-Aldehydharze und/oder Harnstoff-Aldehydharze und/oder zusätzlicher Polymere - bezogen auf Mₙ - mit 0,5 bis 15 mol, bevorzugt 1 bis 10 mol, besonders 2 bis 8 mol der ungesättigten Verbindung (Komponente C) zur Reaktion zu bringen.

In Gegenwart geeigneter Photoinitiatoren, gegebenenfalls in Anwesenheit geeigneter Photosensibilisatoren lassen sich diese Harze durch Bestrahlung in polymere, unlösliche Netzwerke überführen, die, je nach Gehalt ethylenisch ungesättigter Gruppen, Elastomere bis Duroplaste ergeben.

Das folgende Beispiel soll die Erfindung weiter erläutern aber nicht ihren Anwendungsbereich beschränken:

### Beispiel 1:

Die Synthese erfolgt, indem 1 mol eines wasserfreien Cyclohexanon-Formaldehydharzes (Wassergehalt < 0,2 Gew.-%, OHZ = 105 mg KOH/g (Acetanhydridmethode), Mn ∼ 650 g/mol, gegen Polystyrol) mit 1,2 mol eines Umsetzungsproduktes aus IPDI und Hydroxyethylacrylat im Verhältnis 1: 1 in Anwesenheit von 0,2 % (auf Harz) 2,6-Bis(tert-butyl)-4-methylphenol (Ralox BHT, Degussa AG) und 0,1 % (auf Harz) Dibutylzinndilaurat 65 %ig in Methoxypropylacetat in einem Dreihalskolben mit Rührer, Rückflusskühler und Thermofühler in Stickstoffatmosphäre solange bei 80 °C zur Reaktion gebracht werden, bis eine NCO-Zahl unter 0,1 erreicht wird. Die erhaltende helle, klare Lösung besitzt eine dynamische Viskosität von 11,5 Pa.s.

Die Harzlösung wurde mit Darocur 1173 (Ciba Specialty Chemicals, 1,5 % bez. auf Festharz) versehen, auf eine Glasplatte aufgetragen und das Lösemittel bei erhöhter Temperatur (30 min, 80 °C) verdampft. Dann wurden die Filme mittels UV-Licht (Quecksilber-Mitteldruck-Lampe, 70 W / optischer Filter 350 nm) ca. 12 sec. lang ausgehärtet. Die zuvor löslichen Filme sind nicht mehr löslich in Methylethylketon.

## Patentansprüche

1. Strahlenhärtbare Harze, erhalten durch polymeranaloge Umsetzung von
A) mindestens einem Keton-Aldehydharz,
und/oder
B) mindestens einem Harnstoff-Aldehydharz,
mit
C) mindestens einer Verbindung, welche mindestens eine ethylenisch ungesättigte Gruppierung und gleichzeitig mindestens eine gegenüber A) und/oder B) reaktive Gruppierung aufweist.

2. Strahlenhärtbare Harze nach Anspruch 1,
erhalten durch polymeranaloge Umsetzung von
A) mindestens einem Keton-Aldehydharz,
und/oder
B) mindestens einem Harnstoff-Aldehydharz,
mit
C) mindestens einer Verbindung, welche mindestens eine ethylenisch ungesättigte Gruppierung und gleichzeitig mindestens eine gegenüber A) und/oder B) reaktive Gruppierung aufweist
und mindestens einem weiteren hydroxylfunktionaliserten Polymer.

3. Strahlenhärtbare Harze nach Anspruch 2,
**dadurch gekennzeichnet**,
**das** Polyether, Polyester und/oder Polyacrylat eingesetzt werden.

4. Strahlenhärtbare Harze nach Anspruch 2 oder 3,
wobei Mischungen der weiteren Polymere mit den Keton-Aldehydharzen A) und/oder Harnstoff-Aldehydharzen B) polymeranalog mit Komponente C) umgesetzt werden.

5. Strahlenhärtbare Harze nach Anspruch 2 bis 4,
wobei zunächst Addukte aus den Keton-Aldehydharzen A) und/oder Harnstoff-Aldehydharzen B) mit den weiteren Polymeren unter Verwendung geeigneter Di- und/oder Triisocyanaten hergestellt werden, die erst dann mit Komponente C) polymeranalog umgesetzt werden.

6. Strahlenhärtbare Harze nach mindestens einem der vorhergehenden Ansprüche,
**dadurch gekennzeichnet,**
**dass** C-H-acide Ketone in der Komponente A) eingesetzt werden.

7. Strahlenhärtbare Harze nach mindestens einem der vorherigen Ansprüche,
**dadurch gekennzeichnet,**
**dass** in den Keton-Aldehydharzen der Komponente A), Ketone ausgewählt aus Aceton, Acetophenon, Methylethylketon, Heptanon-2, Pentanon-3, Methylisobutylketon, Cyclopentanon, Cyclododecanon, Mischungen aus 2,2,4- und 2,4,4-Trimethylcyclopentanon, Cycloheptanon, Cyclooctanon, Cyclohexanon als Ausgangsbindungen allein oder in Mischungen eingesetzt werden.

8. Strahlenhärtbare Harze nach mindestens einem der vorherigen Ansprüche,
**dadurch gekennzeichnet,**
**dass** in den Keton-Aldehydharzen der Komponente A) alkylsubistituierte Cyclohexanone mit einem oder mehreren Alkylresten, die insgesamt 1 bis 8 Kohlenstoffatome aufweisen, einzeln oder in Mischung eingesetzt werden.

9. Strahlenhärtbare Harze nach Anspruch 8,
**dadurch gekennzeichnet,**
**dass** in den Keton-Aldehydharzen der Komponente A) 4-tert.-Amylcyclohexanon, 2-sek.-Butylcyclohexanon, 2-tert.-Butylcyclohexanon, 4-tert.-Butylcyclohexanon, 2-Methylcyclohexanon und oder 3,3,5-Trimethylcyclohexanon eingesetzt werden.

10. Strahlenhärtbare Harze nach mindestens einem der vorherigen Ansprüche,
**dadurch gekennzeichnet,**
**dass** Acetophenon, Cyclohexanon, 4-tert.-Butylcyclohexanon, 3,3,5-Trimethylcyclohexanon und Heptanon allein oder in Mischung in der Komponente A) eingesetzt werden.

11. Strahlenhärtbare Harze nach mindestens einem der vorherigen Ansprüche,
**dadurch gekennzeichnet,**
**dass** als Aldehyd-Komponente der Keton-Aldehydharze in Komponente A) Formaldehyd, Acetaldehyd, n-Butyraldehyd und/oder iso-Butyraldehyd, Valerianaldehyd, Dodecanal allein oder in Mischungen eingesetzt werden.

12. Strahlenhärtbare Harze nach Anspruch 11,
**dadurch gekennzeichnet,**
**dass** als Aldehyd-Komponente der Keton-Aldehydharze in Komponente A) Formaldehyd und/oder para-Formaldehyd und/oder Trioxan eingesetzt werden.

13. Strahlenhärtbare Harze nach Anspruch 1. oder 2,
**dadurch gekennzeichnet,**
**dass** Harze aus Acetophenon, Cyclohexanon, 4-tert.-Butylcyclohexanon, 3,3,5-Trimethylcyclohexanon, Heptanon allein oder in Mischung und Formaldehyd (Komponente A) eingesetzt werden.

14. Strahlenhärtbare Harze nach einem der vorherigen Ansprüche,
**dadurch gekennzeichnet,**
**dass** als Komponente B) Harnstoff-Aldehydharze, hergestellt unter Verwendung eines Harnstoffes der allgemeinen Formel (i) 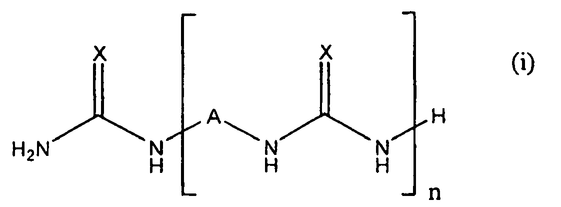 in der X Sauerstoff oder Schwefel, A einen Alkylenrest bedeuten und n für 0 bis 3 steht, mit 1,9 (n + 1) bis 2,2 (n + 1) mol eines Aldehyds der allgemeinen Formel (ii) 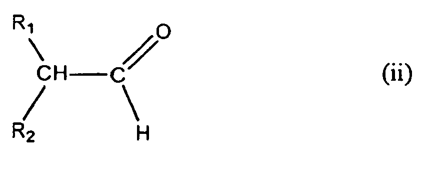 in der R₁ und R₂ für Kohlenwasserstoffreste mit jeweils bis zu 20 Kohlenstoffatomen stehen
und/oder
Formaldehyd, eingesetzt werden.

15. Strahlenhärtbare Harze nach einem der vorherigen Ansprüche,
**dadurch gekennzeichnet,**
**dass** als Komponente B) Harnstoff-Aldehydharze hergestellt unter Verwendung von Harnstoff und Thioharnstoff, Methylendihamstoff, Ethylendiharnstoff, Tetramethylendiharnstoff und/oder Hexamethylendiharnstoff oder deren Gemische eingesetzt werden.

16. Strahlenhärtbare Harze nach einem der vorherigen Ansprüche,
**dadurch gekennzeichnet,**
**dass** als Komponente B) Harnstoff-Aldehydharze hergestellt unter Verwendung von Isobutyraldehyd, Formaldehyd, 2-Methylpentanal, 2-Ethylhexanal und 2-Phenylpropanal oder deren Gemische eingesetzt werden.

17. Strahlenhärtbare Harze nach einem der vorherigen Ansprüche,
**dadurch gekennzeichnet,**
**dass** als Komponente B) Harnstoff-Aldehydharze hergestellt unter Verwendung von Harnstoff, Isobutyraldehyd und Formaldehyd
eingesetzt werden.

18. Strahlenhärtbare Harze nach mindestens einem der vorherigen Ansprüche,
**dadurch gekennzeichnet,**
**dass** als Komponente C) Maleinsäure eingesetzt wird.

19. Strahlenhärtbare Harze nach mindestens einem der vorherigen Ansprüche,
**dadurch gekennzeichnet,**
**dass** als Komponente C) (Meth)acrylsäure und/oder Derivate eingesetzt werden.

20. Strahlenhärtbare Harze nach Anspruch 19,
**dadurch gekennzeichnet,**
**dass** als Komponente C) (Meth)acryloylchlorid, Glycidyl(meth)acrylat, (Meth)acrylsäure und/oder deren niedermolekularen Alkylester und/oder Anhydriden allein oder in Mischung eingesetzt werden.

21. Strahlenhärtbare Harze nach mindestens einem der vorherigen Ansprüche,
**dadurch gekennzeichnet,**
**dass** als Komponente C) Isocyanate, die über eine ethylenisch ungesättigte Gruppierung verfügen, bevorzugt (Meth)acryloylisocyanat, α,α-Dimethyl-3-isopropenylbenzylisocyanat, (Meth)acrylalkylisocyanat mit Alkylspacern, die über 1 bis 12, bevorzugt 2 bis 8, besonders bevorzugt 2 bis 6 Kohlenstoffatome verfügen, bevorzugt Methacrylethylisocyanat, Methacrylbutylisocyanat, eingesetzt werden.

22. Strahlenhärtbare Harze nach mindestens einem der vorherigen Ansprüche,
**dadurch gekennzeichnet,**
**dass** als Komponente C) Umsetzungsprodukte aus Hydroxyalkyl(meth)acrylaten, deren Alkylspacer über 1 bis 12, bevorzugt 2 bis 8, besonders bevorzugt 2 bis 6 Kohlenstoffatome verfügen, mit Di- und/oder Polyisocyanaten eingesetzt werden.

23. Strahlenhärtbare Harze nach Anspruch 22,
**dadurch gekennzeichnet,**
**dass** Diisocyanate ausgewählt aus Cyclohexandiisocyanat, Methylcyclohexandiisocyanat, Ethylcyclohexandiisocyanat, Propylcyclohexandiisocyanat, Methyldiethylcyclohexandiisocyanat, Phenylendiisocyanat, Toluylendiisocyanat, Bis(isocyanatophenyl)methan, Propandiisocyanat, Butandiisocyanat, Pentandiisocyanat, wie Hexamethylendiisocyanat (HDI), 1,5-Diisocyanato-2-methylpentan (MPDI), Heptandiisocyanat, Octandiisocyanat, 1,6-Diisocyanato-2,4,4-trimethylhexan, 1,6-Diisocyanato-2,2,4-trimethylhexan (TMDI), 4-Isocyanatomethyl-1,8-octandiisocyanat (TIN), Dekandi- und triisocyanat, Undekandi- und -triisocyanat, Dodecandi- und -triisocyanate, Isophorondiisocyanat (IPDI), Bis(isocyanatomethyl-cyclohexyl)methan (H₁₂MDI), Isocyanatomethylmethylcyclohexylisocyanat, 2,5(2,6)-Bis(isocyanatomethyl)bicylo[2.2.1]heptan (NBDI), 1,3-Bis(isocyanatomethyl)cyclohexan (1,3-H₆-XDI), 1,4-Bis(isocyanatomethyl)cyclohexan (1,4-H₆-XDI) allein oder in Mischungen, eingesetzt werden.

24. Strahlenhärtbare Harze nach Anspruch 23,
**dadurch gekennzeichnet,**
**dass** Polyisocyanate, hergestellt durch Trimerisierung, Allophanatisierung, Biuretisierung und/oder Urethanisierung einfacher Diisocyanate, eingesetzt werden.

25. Strahlenhärtbare Harze nach mindestens einem der vorherigen Ansprüche,
**dadurch gekennzeichnet,**
**dass** als Komponente C) die Umsetzungsprodukte im molaren Verhältnis von 1:1 bis 1: 1,5, bevorzugt 1:1 von Hydroxyethylacrylat und/oder Hydroxyethylmethacrylat mit Isophorondiisocyanat und/oder H₁₂MDI und/oder HDI eingesetzt werden.

26. Strahlenhärtbare Harze nach mindestens einem der vorherigen Ansprüche,
**dadurch gekennzeichnet,**
**dass** 1 mol des Keton-Aldehydharzes und/oder Harnstoff-Aldehydharzes - bezogen auf Mₙ - und 0,5 bis 15 mol, bevorzugt 1 bis 10 mol, besonders 2 bis 8 mol der ungesättigten Verbindung eingesetzt werden.

27. Verfahren zur Herstellung von strahlenhärtbaren Harzen durch polymeranaloge Umsetzung von
A) mindestens einem Keton-Aldehydharz,
und/oder
B) mindestens einem Harnstoff-Aldehydharz,
mit
C) mindestens einer Verbindung, welche mindestens eine ethylenisch ungesättigte Gruppierung und gleichzeitig mindestens eine gegenüber A) und/oder B) reaktive Gruppierung aufweist.

28. Verfahren zur Herstellung von strahlenhärtbaren Harzen durch polymeranaloge Umsetzung von
A) mindestens einem Keton-Aldehydharz,
und/oder
B) mindestens einem Harnstoff-Aldehydharz,
mit
C) mindestens einer Verbindung, welche mindestens eine ethylenisch ungesättigte Gruppierung und gleichzeitig mindestens eine gegenüber A) und/oder B) reaktive Gruppierung aufweist
und mindestens einem weiteren hydroxyfunktionalisierten Polymer.

29. Verfahren nach Anspruch 27 oder 28,
**dadurch gekennzeichnet,**
**dass** ein Katalysator eingesetzt wird.

30. Verfahren nach Anspruch 27 bis 29,
**dadurch gekennzeichnet,**
**dass** in der Schmelze oder in einem Lösemittel umgesetzt wird.

31. Verfahren nach mindestens einem der vorherigen Ansprüche 27 bis 30,
**dadurch gekennzeichnet,**
**dass** Verbindungen nach mindestens einem der Ansprüche 2 bis 26 eingesetzt werden.

32. Verfahren nach mindestens einem der Ansprüche 27 bis 31,
**dadurch gekennzeichnet,**
**dass** zu der Lösung oder Schmelze der Keton-Aldehydharze A) und/oder Harnstoff-Aldehydharze B) die Verbindung C), gegebenenfalls in Anwesenheit eines geeigneten Katalysators, zugegeben wird.

33. Verfahren nach mindestens einem der Ansprüche 27 bis 31,
**dadurch gekennzeichnet,**
**dass** zu der Lösung oder Schmelze der Keton-Aldehydharze A) und/oder Harnstoff-Aldehydharze B) und dem hydroxyfunktionellen Polymer, die Verbindung C), gegebenenfalls in Anwesenheit eines geeigneten Katalysators, zugegeben wird.

34. Verfahren nach mindestens einem der Ansprüche 27 bis 31,
**dadurch gekennzeichnet,**
**dass** zu der Lösung oder Schmelze der Keton-Aldehydharze A) und/oder Harnstoff-Aldehydharze B) und dem hydroxyfunktionellen Polymer, ein di- und/oder trifunktionelles Isocyanat gegeben und ein hydroxyfunktionelles Präaddukt hergestellt wird und anschließend die Verbindung C), gegebenenfalls in Anwesenheit eines geeigneten Katalysators, zugegeben wird.

35. Verfahren nach mindestens einem der Ansprüche 27 bis 34,
**dadurch gekennzeichnet,**
**dass** bei Temperaturen zwischen 30 und 150 °C, bevorzugt zwischen 50 und 140 °C, umgesetzt wird.

36. Verfahren nach mindestens einem der Ansprüche 27 bis 35,
**dadurch gekennzeichnet,**
**dass** Polyether, Polyester und/oder Polyacrylat als hydroxyfunktionalisierte Polymere eingesetzt werden.

## Claims

1. A radiation-curable resin obtained by polymer-analogously reacting
A) at least one ketone-aldehyde resin
and/or
B) at least one urea-aldehyde resin
and
C) at least one compound comprising at least one ethylenically unsaturated moiety and at the same time at least one moiety which is reactive towards A) and/or B).

2. A radiation-curable resin according to claim 1, obtained by polymer-analogously reacting
A) at least one ketone-aldehyde resin
and/or
B) at least one urea-aldehyde resin
and
C) at least one compound comprising at least one ethylenically unsaturated moiety and at the same time at least one moiety which is reactive towards A) and/or B)
and at least one further hydroxyl-functionalized polymer.

3. A radiation-curable resin according to claim 2, **characterized in that** polyether, polyester and/or polyacrylate are used.

4. A radiation-curable resin according to claim 2 or 3, **characterized in that** a mixture of the further polymer with the ketone-aldehyde resin A) and/or urea-aldehyde resin B) being reacted polymer-analogously with component C).

5. A radiation-curable resin according to claim 2 to 4, first of all an adduct of the ketone-aldehyde resin A) and/or urea-aldehyde resin B) with the further polymer, using suitable di- and triisocyanates, being prepared, and this adduct then being reacted polymer-analogously with component C).

6. A radiation-curable resin according to at least one of the preceding claims, **characterized in that** C-H-acidic ketone is used in component A).

7. A radiation-curable resin according to at least one of the preceding claims, **characterized in that** a ketone selected from acetone, acetophenone, methyl ethyl ketone, heptan-2-one, pentan-3-one, methyl isobutyl ketone, cyclopentanone, cyclododecanone, a mixture of 2,2,4- and 2,4,4-trimethylcyclopentanone, cycloheptanone, cyclooctanone, and cyclohexanone is used as starting compound, alone or in a mixture, in the ketone-aldehyde resin of component A).

8. A radiation-curable resin according to at least one of the preceding claims, **characterized in that** an alkyl-substituted cyclohexanone having one or more alkyl radicals containing in total 1 to 8 carbon atoms, individually or in a mixture, is used in the ketone-aldehyde resin of component A).

9. A radiation-curable resin according to claim 8, **characterized in that** 4-tert-amylcyclohexanone, 2-sec-butylcyclohexanone, 2-tert-butylcyclohexanone, 4-tert-butylcyclohexanone, 2-methylcyclohexanone, or 3,3,5-trimethylcyclohexanone are used in the ketone-aldehyde resin of component A).

10. A radiation-curable resin according to at least one of the preceding claims, **characterized in that** acetophenone, cyclohexanone, 4-tert-butylcyclohexanone, 3,3,5-trimethylcyclohexanone, **or** heptanone, alone or in a mixture, are used in component A).

11. A radiation-curable resin according to at least one of the preceding claims, **characterized in that** formaldehyde, acetaldehyde, n-butyraldehyde and/or isobutyraldehyde, valeraldehyde, or dodecanal, alone or in a mixture, are used as aldehyde component of the ketone-aldehyde resin in component A).

12. A radiation-curable resin according to claim 12, **characterized in that** formaldehyde and/or paraformaldehyde and/or trioxane are used as aldehyde component of the ketone-aldehyde resin in component A).

13. A radiation-curable resin according to claim 1 or 2, **characterized in that** resin formed from acetophenone, cyclohexanone, 4-tert-butylcyclohexanone, 3,3,5-trimethylcyclohexanone, or heptanone, alone or in a mixture, and formaldehyde (component A) is used.

14. A radiation-curable resin according to any one of the preceding claims, **characterized in that** as component B) use is made of a urea-aldehyde resin prepared using a urea of the general formula (I) 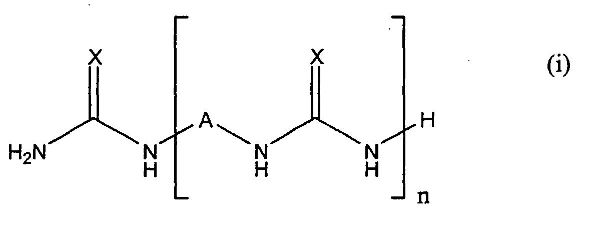 in which X is oxygen or sulphur, A is an alkylene radical, and n is from 0 to 3, with from 1.9 (n + 1) to 2.2 (n + 1) mol of an aldehyde of the general formula (ii) 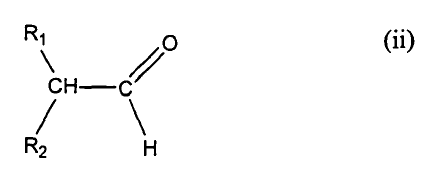 in which R₁ and R₂ are hydrocarbon radicals each having up to 20 carbon atoms and/or formaldehyde.

15. A radiation-curable resin according to any one of the preceding claims, **characterized in that** urea-aldehyde resin prepared using urea and thiourea, methylenediurea, ethylenediurea, tetramethylenediurea and/or hexamethylenediurea or a mixture thereof is used as component B).

16. A radiation-curable resin according to any one of the preceding claims, **characterized in that** urea-aldehyde resin prepared using isobutyraldehyde, formaldehyde, 2-methylpentanal, 2-ethylhexanal, cor- 2-phenylpropanal or a mixture thereof is used as component B).

17. A radiation-curable resin according to any one of the preceding claims, **characterized in that** urea-aldehyde resin prepared using urea, isobutyraldehyde, and formaldehyde is used as component B).

18. A radiation-curable resin according to at least one of the preceding claims, **characterized in that** maleic acid is used as component C).

19. A radiation-curable resin according to at least one of the preceding claims, **characterized in that** (meth)acrylic acid and/or a derivative are used as component C).

20. A radiation-curable resin according to claim 19, **characterized in that** (meth)acryloyl chloride, glycidyl (meth)acrylate, (meth)acrylic acid and/or a low molecular mass alkyl ester and/or anhydride thereof, alone or in a mixture, are used as component C).

21. A radiation-curable resin according to at least one of the preceding claims, **characterized in that** an isocyanate which possesses an ethylenically unsaturated moiety, preferably (meth)acryoyl isocyanate, α,α-dimethyl-3-isopropenylbenzyl isocyanate, (meth)acryloylalkyl isocyanate with alkyl spacers possessing 1 to 12, preferably 2 to 8, more preferably 2 to 6 carbon atoms, preferably methacryloylethyl isocyanate and/or methacryloylbutyl isocyanate, is used as component C).

22. A radiation-curable resin according to at least one of the preceding claims, **characterized in that** a reaction products of hydroxyalkyl (meth)acrylates whose alkyl spacers possess 1 to 12, preferably 2 to 8, more preferably 2 to 6 carbon atoms with diisocyanates and/or polyisocyanates are used as component C).

23. A radiation-curable resin according to claim 22, **characterized in that** a diisocyanate selected from cyclohexane diisocyanate, methylcyclohexane diisocyanate, ethylcyclohexane diisocyanate, propylcyclohexane diisocyanate, methyldiethylcyclohexane diisocyanate, phenylene diisocyanate, tolylene diisocyanate, bis(isocyanatophenyl)methane, propane diisocyanate, butane diisocyanate, pentane diisocyanate, hexamethylene diisocyanate (HDI), 1,5-diisocyanato-2-methylpentane (MPDI), heptane diisocyanate, octane diisocyanate, 1,6-diisocyanato-2,4,4-trimethylhexane, 1,6-diisocyanato-2,2,4-trimethylhexane (TMDI), 4-isocyanatomethyloctane 1,8-diisocyanate (TIN), decane di- and triisocyanate, undecane di- and triisocyanate, dodecane di- and triisocyanate, isophorone diisocyanate (IPDI), bis(isocyanatomethylcyclohexyl)methane (H₁₂MDI), isocyanatomethylmethylcyclohexyl isocyanate, 2,5(2,6)-bis(isocyanatomethyl)bicyclo[2.2.1]heptane (NBDI), 1,3-bis(isocyanatomethyl)cyclohexane (1,3-H₆-XDI), 1,4-bis(isocyanatomethyl)cyclohexane (1,4-H₆-XDI), alone or in a mixture, is used.

24. A radiation-curable resin according to claim 23, **characterized in that** a polyisocyanate prepared by trimerizing, allophanatizing, biuretizing and/or urethaneizing a simple diisocyanate is used.

25. A radiation-curable resin according to at least one of the preceding claims,
**characterized in that** a reaction product in a molar ratio of from 1:1 to 1:1.5, preferably 1:1, of hydroxyethyl acrylate and/or hydroxyethyl methacrylate with isophorone diisocyanate and/or H₁₂MDI and/or HDI is used as component C).

26. A radiation-curable resin according to at least one of the preceding claims, **characterized in that** 1 mol of the ketone-aldehyde resin and/or urea-aldehyde resin - based on Mₙ - and from 0.5 to 15 mol, preferably from 1 to 10 mol, in particular from 2 to 8 mol of the unsaturated compound are used.

27. A process for preparing a radiation-curable resin by polymer-analogously reacting
A) at least one ketone-aldehyde resin,
and/or
B) at least one urea-aldehyde resin
with
C) at least one compound which contains at least one ethylenically unsaturated moiety and at the same time at least one moiety which is reactive towards A) and/or B).

28. A process for preparing a radiation-curable resin by polymer-analogously reacting
A) at least one ketone-aldehyde resin,
and/or
B) at least one urea-aldehyde resin
with
C) at least one compound which contains at least one ethylenically unsaturated moiety and at the same time at least one moiety which is reactive towards A) and/or B),
and at least one further hydroxy-functionalized polymer.

29. A process according to claim 27 or 28, **characterized in that** a catalyst is used.

30. A process according to claim 27 to 29, **characterized in that** reaction is conducted in the melt or in a solvent.

31. A process according to at least one of the preceding claims 27 to 30, **characterized in that** a compound according to at least one of claims 3 to 26 is used.

32. A process according to at least one of claims 27 to 31, **characterized in that** the compound C) in the presence if desired of a suitable catalyst, is added to the solution or melt of the ketone-aldehyde resin A) and/or urea-aldehyde resin B).

33. A process according to at least one of claims 28 to 31, **characterized in that** the compound C), in the presence if desired of a suitable catalyst, is added to the solution or melt of the ketone-aldehyde resin A) and/or urea-aldehyde resin B) and the hydroxy-functional polymer.

34. A process according to at least one of claims 28 to 31, **characterized in that** a di- and/or trifunctional isocyanate is added to the solution or melt of the ketone-aldehyde resin A) and/or urea-aldehyde resin B) and the hydroxy-functional polymer and a hydroxy-functional preadduct is prepared and subsequently the compound C), in the presence if desired of a suitable catalyst, is added.

35. A process according to at least one of claims 27 to 34, **characterized in that** reaction is conducted at a temperature from 30 to 150°C, preferably from 50 to 140°C.

36. A process according to at least one of claims 27 to 35, **characterized in that** polyether, polyester and/or polyacrylate are used as hydroxy-functionalized polymers.

## Revendications

1. Résines durcissables par irradiation, obtenues par réaction polymèranalogue
A) d'au moins une résine cétone-aldéhyde,
et/ou
B) d'au moins une résine urée-aldéhyde
avec
C) au moins un composé qui comporte au moins un groupement éthyléniquement insaturé et en même temps au moins un groupement réactif vis-à-vis de A) et /ou B).

2. Résines durcissables par irradiation selon la revendication 1, obtenues par réaction polymèreanalogue
A) d'au moins une résine cétone - aldéhyde
et/ou
B) d'au moins une résine urée - aldéhyde,
avec
C) au moins un composé qui comporte au moins un groupement éthyléniquement insaturé et en même temps au moins un groupement réactif vis-à-vis de A) et/ou B),
et au moins un autre polymère à fonctionnalité hydroxyle.

3. Résines durcissables par irradiation selon la revendication 2,
**caractérisées en ce qu'**
on utilise un polyéther, un polyester et/ou un polyacrylate.

4. Résines durcissables par irradiation selon la revendication 2 ou 3, pour la préparation desquelles on fait réagir des mélanges des autres polymères avec les résines cétone - aldéhyde A) et/ou les résines urée - aldéhyde B) selon une réaction polymèranalogue avec le composant C).

5. Résines durcissables par irradiation selon les revendications 2 à 4, pour la préparation desquelles on commence par produire des produits d'addition à partir des résines cétone - aldéhyde A) et/ou des résines urée - aldéhyde B) avec les autres polymères, avec utilisation de di- et/ou triisocyanates appropriés, que l'on fait réagir seulement alors avec le composant C) selon une réaction polymèranalogue.

6. Résines durcissables par irradiation selon au moins une des revendications précédentes,
**caractérisées en ce qu'**
on utilise des cétones acides C - H dans le composant A),

7. Résines durcissables par irradiation selon au moins une des revendications précédentes,
**caractérisées en ce que**
dans les résines cétone - aldéhyde du composant A) on utilise des cétones choisies parmi l'acétone, l'acétophénone, la méthyléthylcétone, - l'heptanone-2, la pentanone-3, la méthylisobutylcétone, la cyclopentanone, la cyclododécanone, des mélanges de 2,2,4- et 2,4,4-triméthylcyclopentanones, la cycloheptanone, la cyclooctanone, la cyclohexanone, comme composés de départ, seuls ou en mélanges.

8. Résines durcissables par irradiation selon au moins une des revendications précédentes,
**caractérisées en ce que**
dans les résines cétone - aldéhyde du composant A), on utilise des cyclohexanones alkylsubstituées, comportant un radical ou plusieurs radicaux alkyle, qui comporte(nt) au total 1 à 8 atome(s) de carbone, individuellement ou en mélanges.

9. Résines durcissables par irradiation selon la revendication 8,
**caractérisées en ce que**
dans les résines cétone - aldéhyde du composant A), on utilise la 4-tert-amylcyclohexanone, la 2-sec-butylcyclohexanonc, la 2-tert-butylcyclohexanone, la 4-tert-butylcyclohexanone, la 2-méthylcyclohexanone et/ou la 3,3,5-triméthylcyclohexanone.

10. Résines durcissables par irradiation selon au moins une des revendications précédentes,
**caractérisées en ce qu'**
on utilise l'acétophénone, la cyclohexanone, la 4-tert-butylcyclohexanone, la 3,3,5-tritnéthylcyclohexanone et l'heptanone seules ou en mélanges dans le composant A).

11. Résines durcissables par irradiation selon au moins une des revendications précédentes,
**caractérisées en ce que**
comme composants aldéhyde on utilise des résines cétone - aldéhyde dans le composant A), le formaldéhyde, l'acétaldéhyde, l'aldéhyde n-butyrique et/ou l'aldéhyde iso-butyrique, l'aldéhyde valérianique, le do-décanal, seuls ou en mélanges.

12. Résines durcissables par irradiation selon la revendication 11,
**caractérisées en ce que**
comme composant aldéhyde des résines cétone - aldéhyde dans le composant A), on utilise le formaldéhyde et/ou le para-formaldéhyde et/ou le trioxane.

13. Résines durcissables par irradiation selon la revendication 1 ou 2,
**caractérisées en ce qu'**
on utilise des résines à base d'acétophénone, cyclohexanone, 4-tert-butylcyclohexanone, 3,3,5-triznéthylcyclohexanone, heptanone, seules ou en mélanges et de formaldéhyde (composant A).

14. Résines durcissables par irradiation selon au moins une des revendications précédentes,
**caractérisées en ce que**
comme composant B) on utilise des résines urée - aldéhyde produites avec utilisation d'une urée répondant à la formule générale (i) 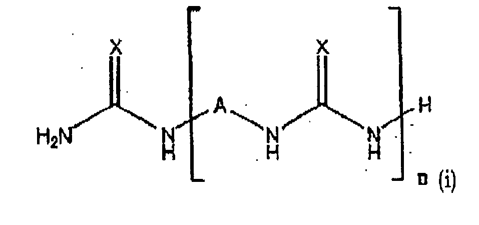 dans laquelle X représente un atome d'oxygène ou un atome de soufre, A représente un radical alkyle et n a pour valeur 0 à 3, avec 1,9 (n+1) à 2,2 (n+1) mole(s) d'un aldéhyde répondant à la formule générale (ii) 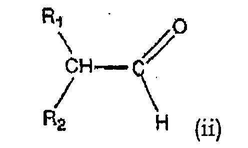 dans laquelle R₁ et R₂ représentent des radicaux hydrocarbonés comportant chacun jusqu'à 20 atomes de carbone,
et/ ou
du formaldéhyde.

15. Résines durcissables par irradiation selon au moins une des revendications précédentes,
**caractérisées en ce que**
comme composant B), on utilise des résines urée -aldéhyde préparées avec utilisation d'urée et de thio-urée, méthylènediurée, éthylènediurée, tétraméthylènediurée et/ou hexaméthylènediurée ou leurs mélanges.

16. Résines durcissables par irradiation selon au moins une des revendications précédentes,
**caractérisées en ce que**
comme composant B), on utilise des résines urée - aldéhyde préparées avec utilisation d'aldéhyde isobutyrique, formaldéhyde, 2-méthylpentanal, 2-éthylhexanal et 2-phénylpropanal ou leurs mélanges.

17. Résines durcissables par irradiation selon au moins une des revendications précédentes,
**caractérisées en ce que**
comme composants B) on utilise des résines urée - aldéhyde préparées avec utilisation d'urée, d'aldéhyde isobutyrique et de formaldéhyde.

18. Résines durcissables par irradiation selon au moins une des revendications précédentes,
**caractérisées en ce qu'**
on utilise comme composant C) l'acide maléïque.

19. Résines durcissables par irradiation selon au moins une des revendications précédentes,
**caractérisées en ce qu'**
on utilise comme composants C) l'acide(méth)acrylique et/ou des dérivés,

20. Résines durcissables par irradiation selon la revendication 19,
**caractérisées en ce qu'**
on utilise comme composant C) le chlorure de (méth)acryloyle, le (méth)acrylate de glycidyle, l'acide (méth)acrylique et/ou ses esters alkyliques et/ou anhydrides de faible poids moléculaire, seuls ou en mélanges.

21. Résines durcissables par irradiation selon au moins une des revendications précédentes,
**caractérisées en ce que**
comme composant C) on utilise des isocyanates qui comportent un groupement éthyléniquement insaturé, de préférence l'isocyanate de (méth)acryloyle, l'isocyanate de α,α-diméthyl-3-isopropénylbenzyle, l'isocyanate de (méth)acrylalkyle avec des espaceurs alkyle qui comportent plus de 1 à 12, de préférence 2 à 8, particulièrement préférablement 2 à 6 atomes de carbone, de préférence l'isocyanate de méthacryléthyle, l'isocyanate de méthacrylbutyle.

22. Résines durcissables par irradiation selon au moins une des revendications précédentes,
**caractérisées en ce que**
comme composant C) on utilise des produits de réaction de (mét)acrylates d'hydroxyalkyle dont les espaceurs alkyle comportent plus de 1 à 12, de préférence 2 à 8, particulièrement préférablement 2 à 6 atomes de carbone avec des di- et/ou polyisocyanates.

23. Résines durcissables par irradiation selon la revendication 22,
**caractérisées en ce qu'**
on utilise des diisocyanates choisis parmi le diisocyanate de cyclohexane, le diisocyanate de méthylcyclohexane, le diisocyanate d'éthylcyclohexane, le diisocyanate de propylcyclohexane, le diisocyanate de méthyldiéthylcyclohexane, le diisocyanate de phénylène, le diisocyanate de toluylène, le bis-(isocyanatophényl)méthane, le diisocyanate de propane, le diisocyanate de butane, le diisocyanate de pentane, le diisocyanate d'hexaméthylène (HDI), le 1,5-düsocyanato-2-méthylpentane (MPDI), le diisocyanated'heptane, le diisocyanate d'octane, le 1,6-diisocyanato-2,4,4-triméthylhexane, le 1,6-diisocyanato-2,2,4-triméthylhexane (TMDI), le diisocyanate de 4-isocyanatométhyl-1,8-octane (TIN), les di- et triisocyanates de décane, les di-et triisocyanates d'undécane, les di-et triisocyanates de dodécane, le diisocyanate d'isophorone (IPDI), le bis(isocyanatométhyl-cyclohexyl)méthane (H₁₂ MDI), l'isocyanate d'isocyanatométhylméthyl-cyclohexyle, le 2,5(2,6)-bis(isocyanatométhyl)bicydo(2,2,1)heptane (NBDI), le 1,3-bis(isocyanatoméhyl)cyclohexane (1,3-H₆ -XDI) le 1,4-bis(isocyanatométhyl)cyclohexane (1,4-H₆ XDI), seuls ou en mélange.

24. Résines durcissables par irradiation selon la revendication 23,
**caractérisées en ce qu'**
on utilise des polyisocyanates préparés par trimérisation, allophanatisation, biurétisation et/ou uréthanisation de diisocyanates simples.

25. Résines durcissables par irradiation selon au moins une des revendications précédentes,
**caractérisées en ce qu'**
on utilise comme composant C) les produits de réaction, dans un rapport molaire de 1/1 â 1 / 5, de préférence 1/1, d'acrylate d'hydroxyéthyle et/ou de méthacrylate d'hydroxyéthyle avec du diisocyanate d'isophorone et/ou H₁₂ MDI et/ou HDI.

26. Résines durcissables par irradiation selon au moins une des revendications précédentes,
**caractérisées en ce qu'**
on utilise une mole de la résine cétone - aldéhyde et/ou de la résine urée - aldéhyde, rapporté à Mₙ, et 0,5 à 15 mole(s), de préférence 1 à 10 mole(s), en particulier 2 à 8 moles du composé insaturé.

27. Procédé de préparation de résines durcissables par irradiation par réaction polymèranalogue
A) d'au moins une résine cétone-aldéhyde,
et/ou
B) d'au moins une résine urée-aldéhyde
avec
C) au moins un composé, qui comporte au moins un groupement éthyléniquement insaturé et en même temps au moins un groupement réactif vis-à-vis de A) et /ou B).

28. Procédé de préparation de résines durcissables par irradiation par réaction polymèrenalogue
A) d'au moins une résine cétone-aldéhyde,
et/ ou
B) d'au moins une résine urée-aldéhyde
avec
C) au moins un composé, qui comporte au moins un groupement éthyléniquement insaturé et en même temps au moins un groupement réactif vis-à-vis de A) et / ou B),
et au moins un autre polymère à fonctionnalité hydroxy.

29. Procédé selon la revendication 27 ou 28,
**caractérisé en ce qu'**
on utilise un catalyseur.

30. Procédé selon les revendications 27 à 29
**caractérisé en ce que**
la réaction a lieu en milieu fondu ou dans un solvant.

31. Procédé selon au moins une des revendications précédentes 27 à 30,
**caractérisé en ce qu'**
on utilise les composés selon au moins une des revendications 2 à 26.

32. Procédé selon au moins une des revendications 27 à 31,
**caractérisé en ce qu'**
à la solution ou à la masse fondue des résines cétone - aldéhyde A) et/ou des résines urée - aldéhyde B), on ajoute le composant C), le cas échéant en présence d'un catalyseur approprié.

33. Procédé selon au moins une des revendications 27 à 31,
**caractérisé en ce qu'**
à la solution ou à la masse fondue des résines cétone - aldéhydre A) et/ou urée - aldéhyde B) et au polymère à fonctionnalité hydroxy, on ajoute le composant C), le cas échéant en présence d'un catalyseur approprié.

34. Procédé selon au moins une des revendications 27 à 31,
**caractérisé en ce qu'**
à la solution ou à la masse fondue des résines cétone - aldéhyde A) et/ou urée - aldéhyde B) et au polymère à fonctionnalité hydroxy, on ajoute un isocyanate di- et /ou tri-fonctionnel et on produit un produit d'addition préalable à fonctionnalité hydroxy, et on ajoute ensuite le composant C) le cas échéant en présence d'un catalyseur approprié.

35. Procédé selon au moins une des revendications 27 à 34,
**caractérisé en ce que**,
la réaction a lieu à des températures situées entre 30 et 150 °C, de préférence entre 50 et 140 °C.

36. Procédé selon au moins une des revendications 27 à 35,
**caractérisé en ce qu'**
on utilise un polyéther, un polyester et/ou un polyacrylate comme polymère(s) à fonctionnalité hydroxy.
